# EUROPEAN PATENT APPLICATION

(11) **EP 4 671 965 A1**
(43) Date of publication of application: **31.12.2025**
(21) Application number: 24759655.4
(22) Date of filing: 20.02.2024
(51) Int. Cl.: G06F 8/20

(54) **MANAGEMENT METHOD AND APPARATUS FOR NAVIGATION TREE VIEW, DEVICE, AND STORAGE MEDIUM**

(30) Priority: 23.02.2023 CN 202310190473
(71) Applicant: Beijing Zitiao Network Technology Co., Ltd., Beijing 100190 (CN)
(72) Inventor: WANG, Jing, Beijing 100028 (CN); YAO, Yuan, Beijing 100028 (CN)
(74) Representative: Isarpatent
(86) International application number: PCT/CN2024/077694
(87) International publication number: WO 2024/174978

(57) **Abstract**

The present embodiments provides management method and apparatus for navigation tree view, device, and storage medium. The method displays an object production interface of a target object production tool, the object production interface includes a navigation tree view, a root component set presented in the navigation tree view represents an object content category of a target object, and a sub-component set under the root component set belongs to the object content category; receive an interactive operation performed on the object production interface; and in response to the interactive operation meeting a set division update condition in the navigation tree view, update a target sub-component set associated with the interactive operation and/or update the root component set to which the target sub-component set belongs, and present it on the navigation tree view.

## Description

### CROSS REFERENCE TO RELATED APPLICATIONS

The present application is based on and claims priority from CN Patent Application No. 202310190473.1 filed on February 23, 2023, the disclosure of which is incorporated by reference herein in its entirety.

### TECHNICAL FIELD

The embodiment of the present disclosure relates to the technical field of computer application, in particular to a management method and an apparatus for navigation tree view, a device, and a storage medium.

### BACKGROUND

With the development of computer technology, designers can produce interfaces or effects/scenes and the like through visual interface design tools or effect/scene production tools. Generally, when a production tool performs design/production of a target object (such as an interface, a effect or a scene), component data related to the production of the target object often needs to be constructed.

The current production tool distributes the constructed component data to a proper component set, forms a tree structure by the component sets with parent-child relationships, and records the component sets without parent nodes as root component sets in the tree structure. Therefore, the target object being produced can be considered to be composed of a plurality of root component sets and sub-component sets contained in the root component sets, and the root component sets and the sub-component data sets of the root component sets can be presented in a navigation frame on a production interface as navigation information of the target object being produced to form a navigation tree view.

**In** practical application, the produced interface, the effect or scene being produced often contains rich contents, and the number of the corresponding component data sets is relatively large. In order to ensure that a plurality of component data sets constituting a target object are organized and managed in a certain pattern, the component data sets may be divided according to the type of content included in the target object. For example, the component data set representing the content of a category A object may be divided together, and the component data set representing the content of a category B object may be divided together, and so on, in order to better support the rendered presentation of the target object content.

### SUMMARY

According to one aspect of the present disclosure, the embodiment of the present disclosure provides A management method for navigation tree view includes:
displaying an object production interface of a target object production tool, the object production interface includes a navigation tree view, a root component set presented in the navigation tree view represents an object content category of a target object, and a sub-component set under the root component set belongs to the object content category;
receiving an interactive operation performed on the object production interface; and
in response to the interactive operation meeting a set division update condition in the navigation tree view, updating a target sub-component set associated with the interactive operation and/or updating the root component set to which the target sub-component set belongs, and presenting it on the navigation tree view.

According to another aspect of the present disclosure, the embodiment of the present disclosure provides A management apparatus for navigation tree view, including:
an interface display module configured to display an object production interface of a target object production tool, the object production interface includes a navigation tree view, a root component set presented in the navigation tree view represents an object content category of a target object, and a sub-component set under the root component set belongs to the object content category;
an operation receiving module configured to receive an interactive operation performed on the object production interface; and
a view presentation module configured to, in response to the interactive operation meeting a set division update condition in the navigation tree view, update a target sub-component set associated with the interactive operation and/or update the root component set to which the target sub-component set belongs, and present it on the navigation tree view.

According to another aspect of the present disclosure, the embodiment of the present disclosure provides an electronic device, including:
one or more processors;
storage device for storing one or more programs;
the one or more programs, when executed by the one or more processors, cause the one or more processors to implement the management method for navigation tree view according to any of the above examples.

According to another aspect of the present disclosure, the embodiment of the present disclosure provides a computer-readable storage medium, on which a computer program is stored which, when being executed by a processor, carries out the management method for navigation tree view according to any of the above examples.

### BRIEF DESCRIPTION OF THE DRAWINGS

The above and other features, advantages, and aspects of embodiments of the present disclosure will become more apparent by referring to the following detailed description when taken in conjunction with the accompanying drawings. Throughout the drawings, the same or similar reference numbers refer to the same or similar elements. It should be understood that the drawings are schematic and that elements and components are not necessarily drawn to scale.
Fig. 1a shows a schematic flow chart illustrating a method for managing a navigation tree view provided by an embodiment of the present disclosure;
Fig. 1b shows a presentation effect diagram of a component set of a tree structure in a conventional navigation tree view;
Fig. 1c shows a presentation effect diagram of the navigation tree view presented in the management method for the navigation tree view provided by the embodiment of the present disclosure;
Fig. 1d shows a presentation effect diagram of the navigation tree view updated based on interactive operation in the management method for the navigation tree view provided by the embodiment of the present disclosure;
Fig. 2 shows a flowchart of a management method for the navigation tree view provided by an embodiment of the present disclosure;
Fig. 3 shows a schematic structural diagram of a management apparatus for the navigation tree view provided by an embodiment of the present disclosure;
Fig. 4 shows a structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in this disclosure are only used to distinguish different devices, modules or units, and are not used to limit the order or interdependence of the functions performed by these devices, modules or units.

It should be noted that the modifications of "a" and "a plurality" mentioned in this disclosure are schematic rather than limiting, and those skilled in the art should understand that unless the context clearly indicates otherwise, they should be understood as "one or more".

Names of messages or information exchanged among multiple devices in the embodiment of the present disclosure are only used for illustrative purposes, and are not used to limit the scope of these messages or information.

It can be understood that, before using the technical solutions disclosed in the embodiments of the present disclosure, users should be informed of the type, scope of use, use scenarios and the like of personal information involved in the present disclosure in an appropriate manner in accordance with relevant laws and regulations, and the authorization of users should be obtained.

For example, in response to receiving an active request from a user, prompt information is sent to the user to clearly inform the user that the operation he/she requests to perform will require the acquisition and use of personal information of the user. Thus, the user can independently choose whether to provide personal information to software or hardware such as an electronic device, an application, a server, or a storage medium that performs the operations of the technical solutions of the present disclosure, according to the prompt information.

As an alternative but non-limiting implementation, a manner of sending prompt information to the user in response to receiving the active request from the user may be, for example, a pop-up window, and the prompt information may be presented in the form of text in the pop-up window. In addition, the pop-up window may also carry a selection control for the user to select "agree" or "disagree" to provide personal information to the electronic device.

It can be understood that the above process of notifying and acquiring user authorization is only illustrative, and does not constitute a limitation on the implementations of the present disclosure, and other methods that meet relevant laws and regulations can also be applied to the implementations of the present disclosure.

It can be understood that the data involved in this technical solution (including but not limited to the data itself, data acquisition or data usage) shall comply with the requirements of corresponding laws, regulations and relevant regulations.

It should be noted that, when some games, animations, simulations and so on are constructed, an interface design tool or a effect production tool is usually required to implement the construction of an interface or an effect therein. Generally, these tools provide a visual interface for designers, and make component data related to the target object constructed by the designers, and the designers can divide a plurality of component data into component data sets of corresponding categories by dragging the component data in a navigation tree, and the like. Subsequent operation processing is based on the divided component data sets, for example, different types of processing are performed on different component data sets to achieve an expected effect. However, the classification operation depends on subjective determination of the designer on the component data, and after the operation is performed by the designer, the production tool cannot check and correct the category to which the operated component data belongs, so that problems may occur in subsequent operation when the determination of the designer is wrong. In addition, the management for dividing the component data sets is mainly realized manually by designers, the whole classification process is greatly related to the personal behaviors of the designers, and the accuracy of the classification of the component data sets cannot be ensured. When the produced target object is delivered to a certain system for execution, if the system wants to uniformly process the component data set for a certain category of object content, an execution problem occurs because of the wrong division of the component data set.

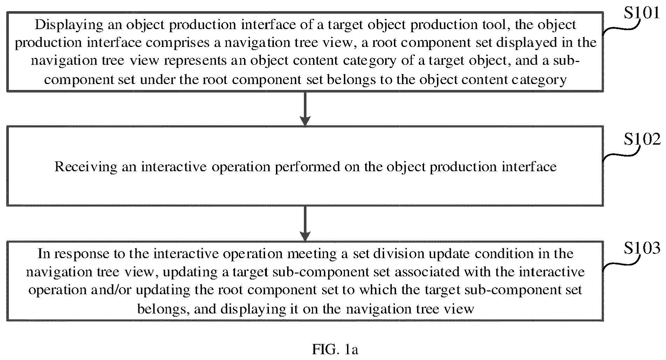

Based on this, the present embodiment provides a management method for a navigation tree view based on an interactive operation, so as to achieve effective management for the navigation tree view involved in an object production process. Fig. 1a shows a schematic flow chart illustrating a method for managing a navigation tree view provided by an embodiment of the present disclosure. The embodiment of the present disclosure is suitable for the case of automatically managing the navigation tree view based on interactive operation, and the method can be executed by a management apparatus for the navigation tree view. The apparatus may be implemented in software and/or hardware, and optionally, may be implemented by an electronic device.

As shown in Fig. 1a, the method of the embodiment of the present disclosure may specifically include:
S101, displaying an object production interface of the target object production tool, the object production interface includes a navigation tree view, a root component set presented in the navigation tree view represents the object content category of the target object, and a sub-component set under the root component set belongs to the object content category.

In the present embodiment, the target object production tool may be a production tool for achieving a target object such as a effect and a scene through a visual interface. The target object may be a game scene, a multimedia data effect, or the like. Accordingly, the target object production tool may be a production tool for producing a scene in a game, or a production tool for producing a effect in multimedia data (such as a long/short video and an image). The object production interface can be a visual interactive interface for producing the target object, and the object production interface includes a navigation tree view.

In the present embodiment, the navigation tree view may be considered as a view field for visually presenting the data of the components depending on which the target object is produced. Generally, the navigation tree view may be empty, and as component data is continuously added in the production process, component data related information (which may be component label information using component data names and the like as component data labels) included in the navigation tree view is gradually increased. The navigation tree view shows the component data information with association relationship (tree structure). For example, the navigation tree view includes a plurality of root component sets, each root component set includes a plurality of sub-component sets, and each sub-component set has a plurality of component data names aggregated therein. The navigation tree view is presented in a tree structure form along with the production of the target object.

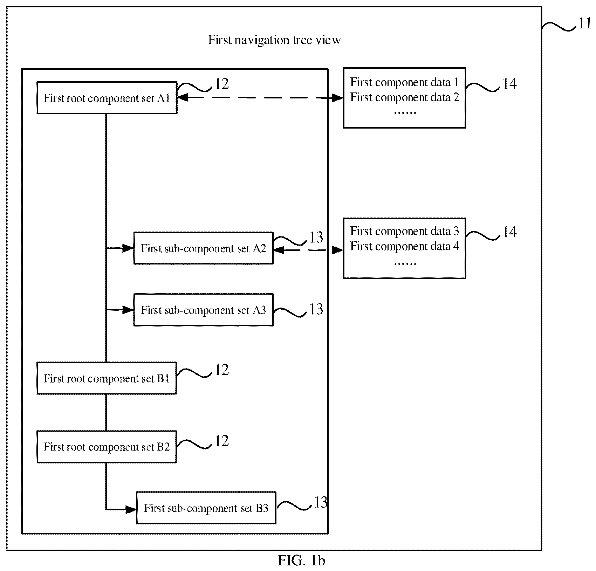

Illustratively, Fig. 1b shows a presentation effect diagram of a component set of a tree structure in a conventional navigation tree view. As shown in Fig. 1b, the first navigation tree view 11 includes a plurality of first root component sets 12, related first sub-component sets 13 belong to different root component sets, and each first sub-component set 13 may further include new sub-component sets that are continuously added along with the production of the target object. In the conventional navigation tree view shown in Fig. 1b, whether it is a root component set or a sub-component set, it corresponds to the first component data 14 involved in the production of the target object, and the first root component set 12 contains component data that is substantially not different from other component sets.

In the present embodiment, the content presented by the navigation tree view also gradually increases with the production of the target object, the presented content also presents in a tree structure form, and may include a plurality of root component sets, and each root component set may include a sub-component set, and the like. In contrast to the conventional navigation tree view presentation in the related art, the root component set in the navigation tree view presented in the present embodiment only represents one object content category and does not contain component data related to the production of the target object, while the sub-component sets under the root component set still correspond to the component data related to the production of the target object, and it can also be considered that the sub-component sets under the root component set all belong to the object content category characterized by the root component set.

In the present embodiment, the object content category may be considered as a result of dividing all object contents included in the target object according to a preset manner for dividing the category. The root component set may include a plurality of sub-component sets, and all sub-component sets thereof may be considered to belong to the object content category corresponding to the root component set. For example, when the target object is a scene including five object contents, which are a pedestrian, a car, a truck, a tree, a grass, and a flower, the corresponding object content category may be a plant, a person, and a vehicle. When the target object is a effect, the effect is provided with different colors and brightness for different areas of the human face, and the corresponding object content category can be the colors and the brightness.

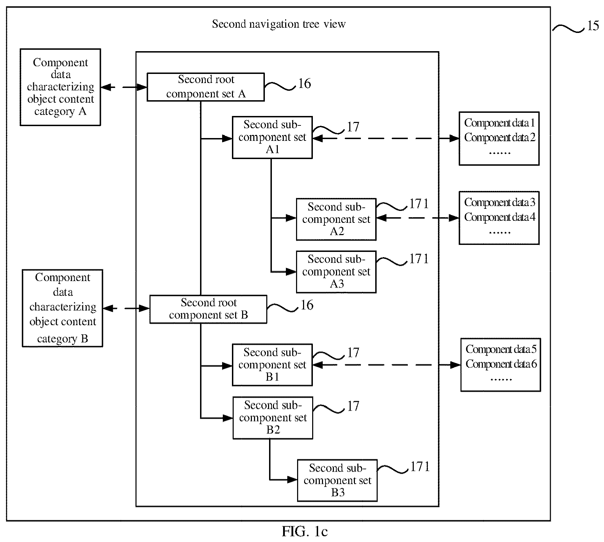

For example, Fig. 1c shows a presentation effect diagram of the navigation tree view presented in the management method for the navigation tree view provided by the embodiment of the present disclosure. As shown in Fig. 1c, the second navigation tree view 15 also includes a plurality of second root sets 16, and each second root set 16 may also include a plurality of second sub-component sets 17. In contrast to the navigation tree view in the related art, each second root component set 16 in the navigation tree view 15 represents an object content category of the object content included in the target object, and each second root component set 16 corresponds to only component data representing the object content category.

It can be appreciated that, in comparison with Fig. 1b, the second root component set 16 in Fig. 1c characterizes one object content category of the target object, and the second sub-component set 17 presented under the second root component set 16 is equivalent to the first root component set 12 in Fig. 1b. The sub-component set 171 further included under the second sub-component set 17 can be equivalent to the first sub-component set 13 in Fig. 1b. It can be seen that, unlike the construction of the navigation tree in the conventional navigation tree view, the structure of the presented navigation tree is adjusted in the management for the navigation tree view provided by the present embodiment. On the presentation level, labels of object content categories of different target objects are added for automatic classification and division of component data.

S102, receiving an interactive operation performed on the object production interface.

In the present embodiment, when the target object is being produced, the designer may perform various required interactive operations on the object production interface, and this step may receive various interactive operations performed on the object production interface. The present embodiment can realize the interactive operation with the designer through buttons or controls and the like provided on the object production interface.

The interactive operation may be an interactive operation involved in the production of the target object, for example, the interactive operation may be an adding operation of a component involved in the production of the object, and may be an operation of clicking, dragging, and changing a component data parameter for the content presented in the navigation tree view. The interactive operation can be performed on any position of the object production interface and can be an interactive control, such as a component adding button. The interactive operation may also be performed in a blank space, for example, a right click in the blank space presents a menu item, or some component data information or some component set information in the presented navigation tree view. The present embodiment may receive the generated interactive operation by listening to information input by the designer.

S103, in response to the interactive operation meeting a set division update condition in the navigation tree view, updating a target sub-component set associated with the interactive operation and/or updating the root component set to which the target sub-component set belongs, and presenting it on the navigation tree view.

In the present embodiment, different interactive operations are often performed on different objects, and the operation behavior events performed with respect to the interactive objects are also different. In the present embodiment, whether the interactive operation received in the above step meets a set division update condition in the navigation tree view may be determined through analysis of the interactive operation, and a target sub-component set related to the interactive operation on the navigation tree view may be updated when the condition is met, and meanwhile, a root component set to which the target sub-component set belongs may also be updated, and an updated result may be presented on the navigation tree view.

It should be noted that, in the related art, a root component set to which a sub-component set belongs may also be changed after performing an interactive operation, and each root component set may have a small difference, and the designer may not be able to accurately determine the root component set to which the sub-component set belongs after performing the interactive operation. Based on the management method for the navigation tree view provided by the present embodiment, the division of the sub-component set related to the interactive operation into the root component set can be effectively realized.

First, it is considered that the present embodiment is the management for a navigation tree view, and thus, it is necessary to determine whether or not management for a navigation tree view can be triggered by analysis of an interactive operation. For example, when the action object of the received interactive operation is not related to the navigation tree view, the interactive operation can be considered not to trigger the management logic for the navigation tree view. Specifically, to execute the operation of this step, it needs to be determined that the action object and/or the operation behavior event of the interactive operation may trigger the execution of the management logic for the navigation tree view. For example, it may be determined that at least the trigger for the management for the navigation tree is currently met when it is determined that the operation behavior event belongs to one of the navigation tree operation behaviors.

As described above, when it is determined that the operation behavior event of the interactive operation belongs to one of the navigation tree operation behaviors, it may be further determined whether an operation type of the interactive operation (for example, the operation type may be an add operation, a delete operation, or a modify operation) meets a condition for updating the component set in the navigation tree view. Finally, when the operation type of the interactive operation belongs to a certain setting operation type, the interactive operation is determined to meet the set division update condition in the navigation tree view.

It should be noted that, the fact that the interactive operation meets the set division update condition in the navigation tree view also mainly means that only the component set affected by the operation behavior event of the interactive operation has the set division update condition, and the component set meeting the condition is often a certain sub-component set or multiple sub-component sets in the navigation tree view. Thus, only a certain sub-component set or a plurality of sub-component sets affected participate in the division update of the sub-component set. The present embodiment may determine a certain sub-component set or multiple sub-component sets affected by the interactive operation as a target sub-component set associated with the interactive operation.

For the update of the target sub-component set and the update of the root component set to which the target sub-component set is divided, objects participating in the update are different and the ways of participating in the update are different based on different operation behavior events corresponding to the interactive operation. For example, when the interactive operation is analyzed as a new add operation of new component data, related information (object label information) of the new component data may be directly added to an existing sub-component set in the navigation tree view to update the target sub-component set.

As described above, for the update of the root component set to which the target sub-component set belongs, one implementation of the update may be that the root component set to which the target sub-component set still belongs is unchanged; another update implementation may be that a new root component set is determined for the target sub-component set according to a predefined policy for dividing the root component set, and when the new root component set is already presented in the navigation tree view, the target sub-component set may be moved from under the root component set to which is originally belongs to under the newly determined root component set.

In another implementation of the update, when the newly determined root component set does not exist in the navigation tree view, the newly determined root component set is first constructed in the navigation tree view, and then the target sub-component set is moved from the original root component set to which is originally belongs to the newly determined root component set.

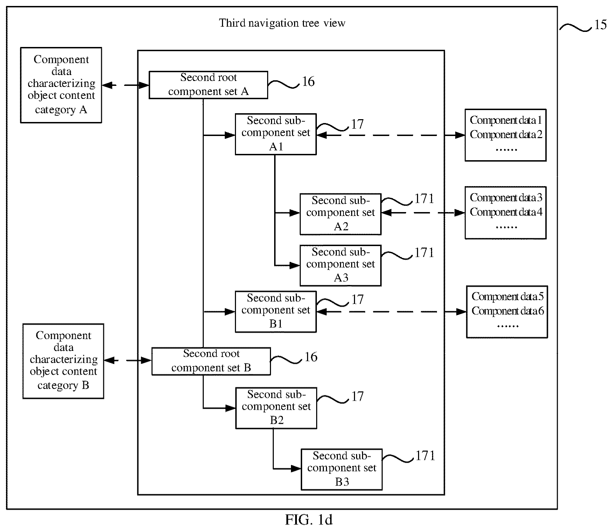

For example, to facilitate understanding of the solution provided by the present invention, on the basis of the navigation tree view presented in Fig. 1c, taking the received interactive operation as an example to modify the component data 5, Fig. 1d shows a presentation effect diagram of the navigation tree view updated based on the interactive operation in the management method for the navigation tree view provided by the embodiment of the present disclosure.

As shown in Fig. 1d, an interactive operation that is performed on an object production interface to modify the component data 5 is received. The operation behavior event corresponding to the interactive operation is one of the trigger navigation tree operation behaviors, the corresponding operation type is a modify operation, and the operation type belongs to the setting operation type, so that the set division update condition in the navigation tree view is met, and the sub-component set corresponding to the component data 5 is determined to be B1, and the root component set to which the sub-component set B1 originally belonging is determined to be B. After each component data in the sub-component set B1 is determined through a preset policy for dividing the root component set, it is determined that the sub-component set B1 after interactive operation belongs to the root component set A which is different from the root component set B to which it originally belongs, and the sub-component set B1 is moved to the position below the root component set A. The finally displayed navigation tree view is shown as a third navigation tree view, and compared with the second navigation tree view in Fig. 1c, it can be seen that the second sub-component set B1 is changed from belonging to the root component set B in Fig. 1c to belonging to the root component set A, so that automatic division of the sub-component set after interactive operation is realized, and the accuracy of the position of each sub-component set in the navigation tree view is ensured.

It can be known that the characteristics of the navigation tree shown by the navigation tree view in the present embodiment meet the presentation requirements after the above steps are executed in the present embodiment. That is, the management for the navigation tree view can be realized by executing the above steps, so that each root component set in the presented navigation tree view is configured for characterizing the object content category of the target object being produced, and the sub-component sets contained in each root component set are the component data set involved in the production of the target object and belong to the object content category characterized by the root component set.

The management method for the navigation tree view provided by the present embodiment is equivalent to providing a management mode for the navigation tree view, and specifically, the representation object of the root component set presented in the navigation tree view is adjusted, which is different from the solution in the related art that the root component set is selected from a plurality of component sets and the classification and belonging of the object contents of the same category are performed on component data manually. In the present embodiment, root component sets that characterize different object content categories are directly added for different object content categories, and sub-component sets included in each root component set can be considered as belonging to the characterized object content category. The present embodiment also realizes the automatic adjustment of the object content category to which the component set belongs, which is different from the manual adjustment of the category to which the component set belongs in the related art. According to the technical solution, through the response to the received interactive operation, when the interactive operation is determined to meet the update condition for dividing the component set under the navigation tree view, the target sub-component set associated with the interactive operation is automatically determined and updated, and meanwhile, the root component set to which the target sub-component set belongs can be updated and displayed on the navigation tree view. By the technical solution, the problem that the classification of the components is inaccurate due to manual division of the component sets in the navigation tree view in the related technology can be solved, the accurate division of the classification to which the component sets belong is realized, the production and learning cost of designers is effectively reduced, the accuracy of the navigation tree view is ensured, and the accuracy of subsequent operation is improved.

It should be noted that, according to the technical solution of the present embodiment, the update of the navigation tree view according to the interactive operation of the object production interface can be realized on a visualization level, which is considered to be realized based on the underlying logic provided for the target object production tool. The present embodiment is equivalent to improvement of the bottom logic of the target object production tool, and specifically, optimization of the target object production tool can be realized by constructing a set of policy and interface for updating the navigation tree view, so that the target object production tool can respond to the provided policy and interface.

Considering that not all interactive operations can affect the update of the navigation tree view, firstly, an operation type determination basis corresponding to the interactive operations can be provided, so that the determination on whether the interactive operations can trigger the management for the navigation tree view can be realized based on the interactive operations; different classifications can be obtained according to different object content categories, and corresponding determination policies are provided for the different classifications to form a determination policy sets corresponding to all the object content categories, so that the specification for dividing the object content category is provided when the navigation tree view is updated; the content presented by the navigation tree view can be optimized to present a root component set corresponding to the object content category and the like, and the included content such as the specification, the policy and the like is packaged to form a corresponding interface form.

On the basis of the above embodiment, it may be determined whether the interactive operation meets the set division update condition in the navigation tree view by:
a1) analyzing the interactive operation, and determining an operation behavior event corresponding to the interactive operation.

In the present embodiment, the operation behavior event may be understood as a behavior corresponding to a change of data in the object production tool affected by the interactive operation. If the interactive operation is to click a plus sign button corresponding to the root component set, the operation behavior event is corresponding to newly adding a root component set.

Specifically, an association relationship table between each interactive operation and a corresponding operation behavior event may be pre-established, the processor may analyze the received interactive operation, and the processor may determine the operation behavior event corresponding to the interactive operation through the association relationship table.
b1) if the operation behavior event exists in a pre-constructed navigation tree operation behavior set, determining an operation type of the operation behavior event.

In the present embodiment, the operation behavior set of the navigation tree may be understood as a set of all operation behavior events affecting the navigation tree in the object production tool. The operation type may be understood as a type that may affect the set in the navigation tree, such as an add type, a delete type, a modify type, a query type, other types, and the like.

Specifically, the processor may compare the operation behavior event with each navigation tree operation behavior included in the navigation tree operation behavior set. If the operation behavior event exists in a pre-constructed navigation tree operation behavior set , the operation type to which the operation behavior event belongs can be determined according to the predetermined association relation table of the operation behavior event and the operation type.

For example, a behavior event may include operations, such as an operation to add, an operation to delete, an operation to copy or an operation to drag, model instantiation, Prefab instantiation, an operation to modify parameters, to any set in the navigation tree. The operation types may include an add type, a delete type, a modify type, and others. The operation to add, the operation to copy, the model instantiation and the Prefab instantiation belong to a newly add type, the operation to delete belongs to a delete type, and the operation to modify parameters and the operation to drag belong to a modify type.
c1) if the operation type belongs to a setting operation type, determining that the interactive operation meets the set division update condition in the navigation tree view.

In the present embodiment, the setting operation type may be understood as a determination basis corresponding to an operation that may affect a change in the set position in the navigation tree.

Specifically, the operation type corresponding to the operation that affects the change of the set position in the navigation tree may be determined in advance and set as the setting operation type, and the processor may determine whether the operation type belongs to the setting operation type. If the operation type belongs to the setting operation type, determining that the interactive operation meets the set division update condition in the navigation tree view.

Illustratively, the setting operation type may include adding data, deleting data, and modifying data. In one example, the interactive operation is to query the set through a query control, the corresponding operation behavior event is a query operation, the corresponding operation type is a query type which does not belong to a setting operation type, so that the set division update condition in the navigation tree view is not met; in another example, the interactive operation is to add a set by a plus sign button, the operation behavior event corresponding to the interactive operation is a new adding operation, the operation type corresponding to the interactive operation is a newly add type which belongs to the setting operation type, so that the set division update condition in the navigation tree view is met.

The technology of the step provides determination logic and basis for determining whether the component set needs to be updated based on the interactive operation, realizes the automation of determining whether the interactive operation meets the set division update condition, can be used as the condition determination basis in packaging, and provides bottom support for the management of the upper navigation tree view.

As an alternative embodiment of the present disclosure, on the basis of the above embodiment, the alternative embodiment may be further optimized such that the sub-component set under the root component set includes component label information, and each piece of component label information is associated with one piece of component data.

In the present embodiment, in each root component set presented in the navigation tree view, the sub-component set under the root component set may be considered to include component label information, each piece of component label information is associated with one piece of component data, and each piece of component data may be considered to be data content of a related component involved in the production of the target object.

It can be understood that, after the target object finishes the addition or construction of a certain component data, it can be determined to which sub-component set under which root component set the component data should belong according to the related attribute information of the component data. The present embodiment can present the component label information characterizing the component data under the sub-component set of the root component set. The component label information may be considered as key information for distinguishing component data, and the component label information may preferably be component name information of the component data.

On the basis of the above optimization, before the updating a target sub-component set associated with the interactive operation and/or updating the root component set to which the target sub-component set belongs, the alternative embodiment may further optimize the following steps:
a2) determining the component data involved in the interactive operation after response as target component data.

Specifically, in the present embodiment, as long as an interactive operation is received, an operation behavior event associated with the interactive operation may be responded, and an update of at least one component data is involved in the response to the operation behavior event. The present embodiment determines the component data involved in the interactive operation after the response as the target component data.
b2) acquiring target component label information corresponding to the target component data, and determining the sub-component set containing the target component label information as the target sub-component set.

It should be noted that, through the execution of the steps provided in the foregoing embodiment, it is considered that the steps preferably added in this alternative embodiment may be specifically executed after the interactive operation meets the set division update condition in the navigation tree view, and before the target sub-component set associated with the interactive operation is updated, and/or the root component set to which the target sub-component set belongs is updated.

In the present embodiment, in consideration that the interactive operation meets the set partition update condition in the navigation tree view, the component data involved in the interactive operation after the response is considered to be substantially associated with the component label information in at least one sub-component set in the navigation tree view, and the present embodiment may consider the component label information associated with the target component data as the target component label information associated with the target component data in the navigation tree view. This step may acquire the target component label information.

It can be known that, after it is determined that the target component data has the target component label information in the navigation tree view, a sub-component set to which the target component label information belongs in the navigation tree view may be further determined, and this step may determine the sub-component set as the target sub-component set.

For example, the operation behavior event of the interactive operation is that the brightness of the face is changed from original a1 to a12, the brightness can be used as target component data, the specific brightness value is changed to a12, and in the navigation tree view, the sub-component set to which the component label information associated with the brightness a1 of the target component data belongs can be used as the target sub-component set.

The above alternative embodiment provides a determination implementation of a target sub-component set associated with an interactive operation, and the present embodiment is equivalent to firstly, based on component data involved in the interactive operation, reversely deducing which target sub-component set to be updated is specifically associated with the interactive operation. Through the technical solution provided by the alternative embodiment, the effective positioning of the target sub-component set is realized, and basic data support is provided for the management for the navigation tree view.

As another alternative embodiment of the present embodiment, on the basis of the foregoing embodiment, this alternative embodiment may further specify the updating a target sub-component set associated with the interactive operation and/or updating the root component set to which the target sub-component set belongs as the following steps:
a3) updating target component label information contained in the target sub-component set, and the target component label information is associated with target component data involved in the interactive operation after response.

In the present embodiment, the update of the target sub-component set may specifically be an update of target component label information, and the target component label information is associated with target component data involved in the interactive operation after response.

In the present embodiment, component data added or constructed during the production of the target object is associated with one piece of component label information, and thus the target component data also has the component label information, which is denoted as target component label information in the present embodiment. Considering that the sub-component set under the root component set in the navigation tree view mainly includes component label information, updating the target component label information is equivalent to updating the sub-component set.

For example, the target component label information may be updated by adding the target component label information to the target sub-component set, deleting the target component label information, or updating the content of the component data associated with the target component label information.

And/or b3) updating the target sub-component set to a determined target root component set according to a pre-constructed policy set for dividing the object content category.

In the present embodiment, the sub-component set in the navigation tree view are present under the root component set. Based on the above description, it can be known that each root component set in the navigation tree view represents an object content category of the target object, and thus, the present embodiment may implement automatic division of a sub-component set into the object content categories by automatically dividing the sub-component set into root component sets to which the sub-component set belongs.

As described above, for the target sub-component, after the target sub-component set itself is updated, the object content category to which the target sub-component set belongs may also be changed accordingly, and in the present embodiment, the target sub-component set after being updated needs to be automatically divided into the correct object content categories by updating the root component set to which the target sub-component set belongs.

For example, the present embodiment may determine, through a pre-constructed policy set for dividing the object content category, a target root component set to which the target sub-component set should belong after being updated for the target sub-component set, and update the target sub-component set to the target root component set.

In the present embodiment, the policy set for dividing the object content category may be understood as policies for determining object content categories to which the component set belongs, each object content category corresponds to one policy for dividing the object content category, and the policies for dividing the object content category are orthogonal to each other. The mutual orthogonality between the policies for dividing the object content may be understood as that the determination conditions for dividing the object category included in the policies for dividing the object content are different from each other.

In one implementation of determining the target root component set, information to be determined corresponding to the target sub-component set may be sequentially compared with each policy for dividing the object content category in a pre-constructed policy set for dividing the object content category, to determine which policy for dividing the object content category the target sub-component set matches, and an object content category corresponding to the matched policy for dividing the object content category may be used as an object content category to which the target sub-component set newly belongs after being updated, and in the present embodiment, the root component set corresponding to the object content category may be used as a target root component set of the target sub-component set.

The technical solution provided by the present embodiment provides the specific updating implementation when the interactive operation meets the set division update condition in the navigation tree view. The implementation includes the update of the target sub-component set and the update of the target root component set to which the target sub-component set belongs, the problem of inaccuracy of the classifications to which the components belong caused by manual division of the component set in the navigation tree view in the related technology is avoided, the accurate division of the classification to which the component set belongs is realized, the production and learning cost of designers is effectively reduced, the accuracy of the navigation tree view is ensured, and the accuracy of subsequent operation is improved.

On the basis of the alternative embodiment, another alternative embodiment may further specify the updating the target sub-component set to a determined target root component set according to a pre-constructed policy set for dividing the object content category as:
b31) acquiring a first root component set to which the target sub-component set belongs before being updated.

In the present embodiment, the first root component set may be understood as the root component set to which the target sub-component set belongs before the object content category is determined, i.e., before the target sub-component set is updated. The first root component set may be an initial root component set to which the target sub-component set belongs when initially presented in the navigation tree view, or a previous root component set to which the target sub-component set belongs after a previous root component set update is performed in the navigation tree view before the current root component update is performed. The first root component set can also be a historical root component set to which the target sub-component set is predesignated to belong according to a setting algorithm.
b32) determining a second root component set to which the target sub-component set belongs after being updated according to the policy set for dividing the object content category.

In the present embodiment, the second root component set may be understood as the root component set to which a target sub-component set belongs after being divided by the policy set for dividing the object content category.

Specifically, the execution main body of the method provided in the present embodiment may compare the target sub-component set with each policy for dividing the object content category in the pre-constructed policy set for dividing the object content category in sequence, determine the policy for dividing the object content category that the target sub-component set conforms to, obtain the object content category to which the target sub-component set belongs, and further determine the second root component set corresponding to the object content category.
b33) determining the target root component set from the first root component set and the second root component set, and updating the target sub-component set to the target root component set.

In the present embodiment, for the target root component set to which the target sub-component set finally belongs, there are the following situations: the first situation is that the first root component set and the second root component set are the same root component set; the second situation is that the first root component set and the second root component set are different root component sets, and the second root component set does not exist in the navigation tree view; the third situation is that the first root component set and the second root component set are different root component sets, and the second root component set does not existexists in the navigation tree view.

The manner of determining the target root component set and updating the target sub-component set to the target root component set is different for the above different situations. Illustratively, the target root component set in the first situation is the first root component set. At this point, the root component set to which the target sub-component set belongs does not need to be changed and may continue to be maintained in the first root component set.

The target root component set in the second situation above should be the second root component set. At this time, since the second root component set does not exist in the navigation tree view, the second root component set needs to be constructed and added in the navigation tree view, and then the target sub-component set is moved from the first root component set to the target root component set.

The target root component set in the third situation is also the second root component set. At this time, since the second root component set already exists in the navigation tree view, the target sub-component set can be directly moved from the first root component set to the target root component set without constructing the second root component set in the navigation tree view.

According to the technical solution of the present embodiment, the specific implementation that the target sub-component set is updated to the determined target root component set is provided, and the condition limitation for the target sub-component set updating the target root component set to which it belongs is specified. The automatic division of the sub-component set to the object content category is better realized, the accuracy of the navigation tree view is ensured, and the accuracy of subsequent operation is improved.

On the basis of this alternative embodiment, the determining a second root component set to which the target sub-component set belongs after being updated according to the policy set for dividing the object content category may specifically include the following steps:
b321) acquiring a policy for dividing the object content category contained in the policy set for dividing the object content category, and each policy for dividing the object content category corresponds to one object content category.

It should be noted that, in order to avoid the coupling between the object content categories, which results in that one target sub-component set corresponds to multiple object content categories when object content categories are divided, it is necessary to ensure that there is no overlapping item between the policies for dividing the object content category when the policies for dividing the object content category are formulated, so that each policy for dividing the object content category only corresponds to one object content category.

Specifically, the processor may sequentially obtain the policies for dividing the object content category in the policy set for dividing the object content category, where each policy for dividing the object content category corresponds to one object content category.
b322) determining parameter information to be determined of the target sub-component set according to component label information contained in the target sub-component set after being updated.

In the present embodiment, the target sub-component set may include one or more pieces of component label information after being updated, each piece of component label information is associated with one piece of component data, and the parameter information to be determined of the target sub-component set needs to be formed by all pieces of component label information included in the target sub-component set.

It should be noted that each piece of component data corresponds to a related component attribute parameter, and in the present embodiment, the parameter information to be determined may be formed by the component attribute parameter of the component data associated with each piece of component label information included. The component attribute parameter may be understood as a parameter characterizing a target sub-component set. The parameter information to be determined may be understood as parameter information for dividing the object content category.

It can be known that each policy for dividing the object content category may include a plurality of determination conditions, each determination condition may have different parameter types, and the parameter type corresponds to the component data and the component attribute parameter included in the target sub-component set. For example, the determination conditions in the policy A for dividing the object content category are as follows: the brightness is between a1 and a5, and the width is between c and d.

Specifically, the execution body of the method provided by the present embodiment may obtain component data and component attribute parameters included in the target sub-component set, and determine parameter information to be determined of the target sub-component set according to the component data and the component attribute parameters based on the parameters corresponding to all the division conditions in the policy set according to the object content category.
b323) determining a target object content category to which the target sub-component set belongs after being updated according to the parameter information to be determined and the policy for dividing the object content category, and marking a root component set corresponding to the target object content category as a second root component set.

In the present embodiment, the target object content category may be understood as an object content category corresponding to the divided target sub-component set.

Specifically, the parameter information to be determined may be compared with the corresponding parameter conditions in the policy for dividing the object content category, so as to determine the object content category to which the object sub-component set belongs, and mark the root component set corresponding to the object content category as the object root component set.

Illustratively, when the original target component data is a brightness value a1, the sub-component set to which the original target component data belongs is A, the brightness value range in the policy for dividing the object content to which the sub-component set A belongs is a1-a3, however, when the brightness value range in the modified target component data is a12, and the brightness value range in the corresponding policy for dividing the object content D2 is a10-a12, then D is taken as the target object content category, and the corresponding root component set D2 is taken as the target root component set.

The above technical solution of the present embodiment provides a specific implementation for determining a target root component set by a policy set for dividing the object content category, which is equivalent to providing a bottom technical support for updating a navigation tree view in the present embodiment.

On the basis of this alternative embodiment, the determining the target root component set from the first root component set and the second root component set, and updating the target sub-component set to the target root component set may specifically include the following steps:
b331) if the first root component set and the second root component set are the same root component set, determining the first root component set as the target root component set and keeping the target sub-component set unchanged in the first root component set.
b332) if the first root component set and the second root component set are different root component sets, determining the second root component set as the target root component set.
b333) determining whether the target root component set exists in the navigation tree view, if yes, executing step b334); if not, execute step b335).
b334) moving the target sub-component set from the first root component set to the target root component set.
b335) constructing the target root component set and adding it into the navigation tree view, and returning to execute the step b334).

According to the technical solution, a specific implementation that the target sub-component set is updated to the target root component set is provided, by determining whether the first root component set and the second root component set are the same, the position of the component to be updated in the navigation tree view is determined, the accuracy and the automation of the management for the navigation tree view are realized, and a determination logic of the position of the component set is provided for packaging.

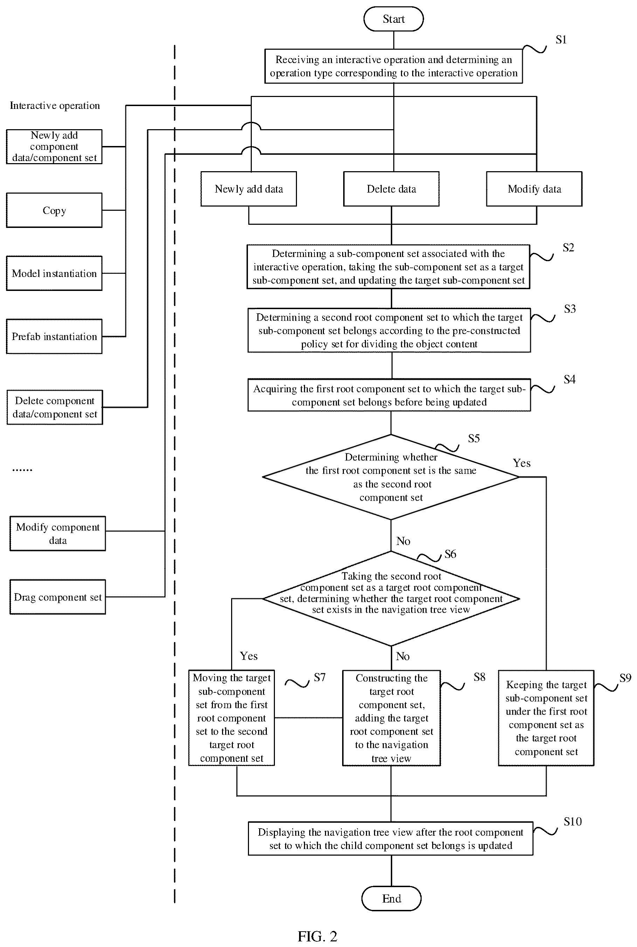

To facilitate understanding of the present solution, a specific example is given, Fig. 2 shows a flowchart of a management method for the navigation tree view provided by an embodiment of the present disclosure, and as shown in Fig. 2, the left side is an exemplary presentation of several interactive operations that meet a set division update condition. The method includes the following implementation steps:
S1, receiving an interactive operation and determining an operation type corresponding to the interactive operation, and the operation type can exemplarily include adding data, deleting data and modifying data.
S2, determining a sub-component set associated with the interactive operation, taking the sub-component set as a target sub-component set, and updating the target sub-component set.
S3, determining a second root component set to which the target sub-component set belongs according to the pre-constructed policy set for dividing the object content.
S4, acquiring the first root component set to which the target sub-component set belongs before being updated.
S5, determining whether the first root component set is the same as the second root component set, if yes, jumping to step S9; if not, jumping to step S6.
S6, taking the second root component set as a target root component set, determining whether the target root component set exists in the navigation tree view, and if so, jumping to the step S7; if not, jumping to step S8.
S7, moving the target sub-component set from the first root component set to the second target root component set, and executing S10.
S8, constructing the target root component set, adding the target root component set to the navigation tree view, and returning to continue to execute S7.
S9, keeping the target sub-component set under the first root component set as the target root component set, and executing S10.
S10, presenting the navigation tree view after the root component set to which the child component set belongs is updated.

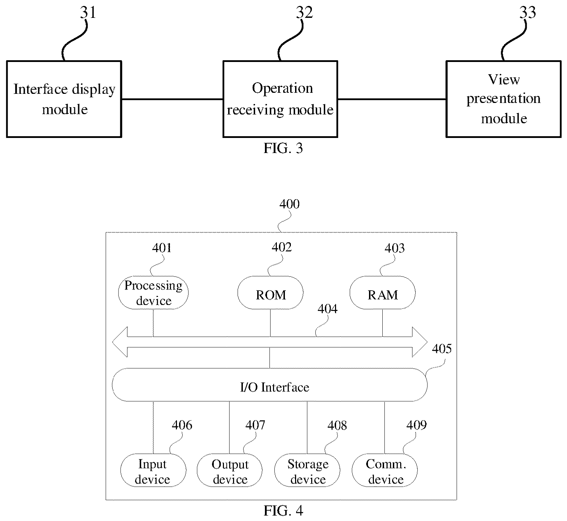

Fig. 3 shows a schematic structural diagram of a management apparatus for the navigation tree view provided by an embodiment of the present disclosure, and as shown in Fig. 3, the apparatus includes: an interface display module 31, an operation receiving module 32, and a view presentation module 33, in which
the interface display module 31 is configured to display an object production interface of a target object production tool, the object production interface includes a navigation tree view, a root component set presented in the navigation tree view represents an object content category of a target object, and a sub-component set under the root component set belongs to the object content category;
the operation receiving module 32 is configured to receive an interactive operation performed on the object production interface; and
the view presentation module 33 is configured to, in response to the interactive operation meeting a set division update condition in the navigation tree view, update a target sub-component set associated with the interactive operation and/or update the root component set to which the target sub-component set belongs, and present it on the navigation tree view.

The management apparatus for the navigation tree view provided by the present embodiment is equivalent to providing a management mode for the navigation tree view, and specifically, the representation object of the root component set presented in the navigation tree view is adjusted, which is different from the solution in the related art in which the root component set is selected from a plurality of component sets and the classification and belonging of the object contents of the same category are performed on component data manually. In the present solution, for different object content categories, root component sets that characterize different object content categories are directly added, and sub-component sets included in each root component set can be considered as belonging to the characterized object content category. Meanwhile, the present management apparatus also realizes the automatic adjustment of the object content category to which the component set belongs, which is different from the manual adjustment of the category to which the component set belongs in the related art, and through responding to the received interactive operation, when the interactive operation is determined to meet the update condition for dividing the component set under the navigation tree view, the present management apparatus can automatically determine and update the target sub-component set associated with the interactive operation, and meanwhile, can update and present the root component set to which the target sub-component set belongs on the navigation tree view. By the present management apparatus, the issue of inaccurate classification of components in the navigation tree view, caused by manual division of the component sets in the navigation tree view in the related technology can be solved, the accurate division of the classification to which the component sets belong is realized, the production and learning cost for the designers is effectively reduced, the accuracy of the navigation tree view is ensured, and the accuracy of subsequent operation is improved.

Further, the apparatus further includes an interactive determination module, and the interactive determination module is specifically configured to:
analyze the interactive operation, and determine an operation behavior event corresponding to the interactive operation;
if the operation behavior event exists in a pre-constructed navigation tree operation behavior set, determine an operation type of the operation behavior event; and
if the operation type belongs to a setting operation type, determine that the interactive operation meets the set division update condition in the navigation tree view.

Further, the apparatus can be further optimized such that the sub-component set under the root component set includes component label information, and each piece of component label information is associated with one piece of component data; correspondingly, the apparatus can further include:
a first determination module configured to determine the component data involved in the interactive operation after response as target component data; and
a second determination module configured to acquire target component label information corresponding to the target component data, and determine the sub-component set containing the target component label information as the target sub-component set.

Further, the view presentation module 33 can specifically include:
a first update unit configured to update target component label information contained in the target sub-component set, and the target component label information is associated with target component data involved in the interactive operation after response; and/or
a second update unit configured to update the target sub-component set to a determined target root component set according to a pre-constructed policy set for dividing the object content category.

Further, the second update unit can specifically include:
an acquisition subunit configured to acquire a first root component set to which the target sub-component set belongs before being updated;
a determination subunit configured to determine a second root component set to which the target sub-component set belongs after being updated according to the policy set for dividing the object content category; and
a root component update subunit configured to determine the target root component set from the first root component set and the second root component set, and update the target sub-component set to the target root component set.

Further, the determination subunit can specifically be configured to:
acquire a policy for dividing the object content category contained in the policy set for dividing the object content category, and each policy for dividing the object content category corresponds to one object content category;
determine parameter information to be determined of the target sub-component set according to component label information contained in the target sub-component set after being updated; and
determine a target object content category to which the target sub-component set belongs after being updated according to the parameter information to be determined and the policy for dividing the object content category, and mark a root component set corresponding to the target object content category as a second root component set.

Further, the root component update subunit can specifically be configured to:
if the first root component set and the second root component set are the same root component set, determine the first root component set as the target root component set and keep the target sub-component set unchanged in the first root component set;
if the first root component set and the second root component set are different root component sets, determine the second root component set as the target root component set and determine whether the target root component set exists in the navigation tree view;
if yes, move the target sub-component set from the first root component set to the target root component set;
if not, construct the target root component set and adding it into the navigation tree view, and move the target sub-component set from the first root component set to the target root component set.

The management apparatus for navigation tree view provided by the embodiment of the present disclosure can execute the management method for navigation tree view provided by any embodiment of the present disclosure, and has corresponding functional modules and beneficial effects.

It should be noted that, the units and modules included in the apparatus are merely divided according to functional logic, but are not limited to the above division as long as the corresponding functions can be implemented. In addition, specific names of the functional units are also only used for distinguishing one functional unit from another, and are not used for limiting the protection scope of the embodiments of the present disclosure.

Fig. 4 is a schematic structural diagram of an electronic device according to an embodiment of the present disclosure. Referring now to Fig. 4, a schematic diagram of an electronic device 400 (for example, the terminal device or the server in Fig. 4) suitable for implementing embodiments of the present disclosure is shown. The terminal device in the embodiments of the present disclosure can include, but is not limited to, a mobile terminal such as a mobile phone, a notebook computer, a digital broadcast receiver, a PDA (personal digital assistant), a PAD (tablet computer), a PMP (portable multimedia player), a vehicle terminal (e.g., a car navigation terminal), and the like, and a fixed terminal such as a digital TV, a desktop computer, and the like. The electronic device shown in Fig. 4 is only an example, and should not bring any limitation to the functions and the scope of use of the embodiments of the present disclosure.

As shown in Fig. 4, the electronic device 400 can include a processing device (e.g., central processing unit, graphics processor, etc.) 401 that can perform various appropriate actions and processes in accordance with a program stored in a read-only memory (ROM) 402 or a program loaded from a storage device 408 into a random access memory (RAM) 403. In the RAM 403, various programs and data necessary for the operation of the electronic device 400 are also stored. The processing device 401, the ROM 402, and the RAM 403 are connected to each other through a bus 404. An input/output (I/O) interface 405 is also connected to bus 404.

Generally, the following devices can be connected to the I/O interface 405: input device 406 including, for example, a touch screen, a touch pad, a keyboard, mouse, a camera, a microphone, accelerometer, gyroscope and the like; an output device 407 including, for example, a Liquid Crystal Display (LCD), a speaker, a vibrator, and the like; storage device 408 including, for example, magnetic tape, hard disk and the like; and a communication device (Comm. device) 409. The communication device 409 can allow the electronic device 400 to communicate with other devices, either wirelessly or by wire, to exchange data. While Fig. 4 illustrates an electronic device 400 having various devices, it is to be understood that not all illustrated means are required to be implemented or provided. More or fewer devices can be alternatively implemented or provided.

In particular, the processes described above with reference to the flow diagrams can be implemented as computer software programs, according to embodiments of the present disclosure. For example, embodiments of the present disclosure include a computer program product including a computer program carried on a non-transitory computer readable medium, the computer program containing program code for performing the method illustrated by the flow chart. In such an embodiment, the computer program can be downloaded and installed from a network via the communication device 409, or installed from the storage device 408, or installed from the ROM 402. The computer program, when executed by the processing device 401, performs the above-described functions defined in the methods of the embodiments of the present disclosure.

The names of messages or information exchanged between devices in the embodiments of the present disclosure are for illustrative purposes only, and are not intended to limit the scope of the messages or information.

The electronic device provided by the embodiment of the present disclosure and the session page display method based on the multimedia object provided by the above embodiment belong to the same inventive concept, and technical details that are not described in detail in the embodiment can be referred to the above embodiment, and the embodiment and the above embodiment have the same advantageous effects.

The disclosed embodiments provide a computer storage medium on which a computer program is stored, which when executed by a processor performs the session page display method based on multimedia object provided by the above embodiments.

It should be noted that the computer readable medium of the present disclosure can be a computer readable signal medium or a computer readable storage medium or any combination of the two. A computer readable storage medium can be, for example, but not limited to, an electronic, magnetic, optical, electromagnetic, infrared, or semiconductor system, apparatus, or device, or any combination of the foregoing. More specific examples of the computer readable storage medium can include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium can be any tangible medium that can contain, or store a program for use by or in connection with an instruction execution system, apparatus, or device. In contrast, in the present disclosure, a computer readable signal medium can include a propagated data signal with computer readable program code embodied therein, for example, in baseband or as part of a carrier wave. Such a propagated data signal can take any of a variety of forms, including, but not limited to, electro-magnetic, optical, or any suitable combination thereof. A computer readable signal medium can be any computer readable medium that is not a computer readable storage medium and that can communicate, propagate, or transport a program for use by or in connection with an instruction execution system, apparatus, or device. Program code embodied on a computer readable medium can be transmitted using any appropriate medium, including but not limited to: electrical wires, optical cables, radio frequency (RF) and so forth, or any suitable combination of the foregoing.

In some embodiments, the clients and the servers can communicate using any currently known or future developed network Protocol, such as HyperText Transfer Protocol (HTTP), and can be interconnected with any form or medium of digital data communication (e.g., a communication network). Examples of communication networks include a local area network ("LAN"), a wide area network ("WAN"), the Internet, and peer-to-peer networks (e.g., ad hoc peer-to-peer networks), as well as any currently known or future developed network.

The computer readable medium can be embodied in the electronic device or can be separate and not incorporated into the electronic device.

The computer readable medium carries one or more programs which, when executed by the electronic device, cause the electronic device to: perform material analysis processing on the original material of the business object to obtain the target graphic material of the business object; generate configuration information based on the target graphic material and the poster of the business object, and generate target poster description information; generate and display the target poster image of the business object by rendering the description information of the target poster.

Computer program code for carrying out operations for aspects of the present disclosure can be written in any combination of one or more programming languages, including but not limited to an object oriented programming language such as Java, Smalltalk, C++, including conventional procedural programming languages, such as the "C" programming language or similar programming languages. The program code can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a Local Area Network (LAN) or a Wide Area Network (WAN), or the connection can be made to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams can represent a module, a segment of program, or a portion of code, which includes one or more executable instructions for implementing the specified logical function. It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure can be implemented by software or hardware. The name of a unit does not in some cases constitute a limitation of the unit itself. For example, the first acquisition unit can also be described as "the unit for acquiring at least two internet protocol addresses".

The functions described herein above can be performed, at least in part, by one or more hardware logic components. For example, without limitation, exemplary types of hardware logic components that can be used include: field Programmable Gate Arrays (FPGA), Application Specific Integrated Circuits (ASIC), Application Specific Standard Products (ASSP), system on a chip (SOC), Complex Programmable Logic Devices (CPLD), and the like.

In the context of this disclosure, a machine-readable medium can be a tangible medium that can contain, or store a program for use by or in connection with an instruction execution system, apparatus, or device. The machine-readable medium can be a machine-readable signal medium or a machine-readable storage medium. A machine-readable medium can include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, one example provides a management method for navigation tree view, and the method includes: displaying an object production interface of a target object production tool, the object production interface includes a navigation tree view, a root component set presented in the navigation tree view represents an object content category of a target object, and a sub-component set under the root component set belongs to the object content category; receiving an interactive operation performed on the object production interface; and in response to the interactive operation meeting a set division update condition in the navigation tree view, updating a target sub-component set associated with the interactive operation and/or updating the root component set to which the target sub-component set belongs, and presenting it on the navigation tree view.

According to one or more embodiments of the present disclosure, one example provides a management method for navigation tree view, and the method determine whether the interactive operation meets the set division update condition in a navigation tree view is performed by the following steps, specifically including: analyzing the interactive operation, and determining an operation behavior event corresponding to the interactive operation; if the operation behavior event exists in a pre-constructed navigation tree operation behavior set, determining an operation type of the operation behavior event; and if the operation type belongs to a setting operation type, determining that the interactive operation meets the set division update condition in the navigation tree view.

According to one or more embodiments of the present disclosure, one example provides a management method for navigation tree view, and the method is optimized such that the sub-component set under the root component set includes component label information, and each piece of component label information is associated with one piece of component data;
corresponding, before the updating a target sub-component set associated with the interactive operation and/or updating the root component set to which the target sub-component set belongs, the method further includes: determining the component data involved in the interactive operation after response as target component data; and acquiring target component label information corresponding to the target component data, and determining the sub-component set containing the target component label information as the target sub-component set.

According to one or more embodiments of the present disclosure, one example provides a management method for navigation tree view, and the method optimizes the updating a target sub-component set associated with the interactive operation and/or updating the root component set to which the target sub-component set belongs, specifically including:
updating target component label information contained in the target sub-component set, and the target component label information is associated with target component data involved in the interactive operation after response; and/or
updating the target sub-component set to a determined target root component set according to a pre-constructed policy set for dividing the object content category.

According to one or more embodiments of the present disclosure, one example provides a management method for navigation tree view, and the method optimizes the updating the target sub-component set to a determined target root component set according to a pre-constructed policy set for dividing the object content category, specifically including: acquiring a first root component set to which the target sub-component set belongs before being updated; determining a second root component set to which the target sub-component set belongs after being updated according to the policy set for dividing the object content category; and determining the target root component set from the first root component set and the second root component set, and updating the target sub-component set to the target root component set.

According to one or more embodiments of the present disclosure, one example provides a management method for navigation tree view, and the method optimizes the determining a second root component set to which the target sub-component set belongs after being updated according to the policy set for dividing the object content category, specifically including:
acquiring a policy for dividing the object content category contained in the policy set for dividing the object content category, and each policy for dividing the object content category corresponds to one object content category;
determining parameter information to be determined of the target sub-component set according to component label information contained in the target sub-component set after being updated; and
determining a target object content category to which the target sub-component set belongs after being updated according to the parameter information to be determined and the policy for dividing the object content category, and marking a root component set corresponding to the target object content category as a second root component set.

According to one or more embodiments of the present disclosure, one example provides a management method for navigation tree view, and the method optimizes the determining the target root component set from the first root component set and the second root component set, and updating the target sub-component set to the target root component set, specifically including:
if the first root component set and the second root component set are the same root component set, determining the first root component set as the target root component set and keeping the target sub-component set unchanged in the first root component set;
if the first root component set and the second root component set are different root component sets, determining the second root component set as the target root component set and determining whether the target root component set exists in the navigation tree view;
if yes, moving the target sub-component set from the first root component set to the target root component set;
if not, constructing the target root component set and adding it into the navigation tree view, and moving the target sub-component set from the first root component set to the target root component set.

According to one or more embodiments of the present disclosure, one example provides a management apparatus for navigation tree view, and the apparatus includes:
an interface display module configured to display an object production interface of a target object production tool, the object production interface includes a navigation tree view, a root component set presented in the navigation tree view represents an object content category of a target object, and a sub-component set under the root component set belongs to the object content category;
an operation receiving module configured to receive an interactive operation performed on the object production interface; and
a view presentation module configured to, in response to the interactive operation meeting a set division update condition in the navigation tree view, update a target sub-component set associated with the interactive operation and/or update the root component set to which the target sub-component set belongs, and present it on the navigation tree view.

According to one or more embodiments of the present disclosure, one example provides an electronic device, including: one or more processors; storage device for storing one or more programs, and the one or more programs, when executed by the one or more processors, cause the one or more processors to implement the management method for navigation tree view according to any of the above examples.

According to one or more embodiments of the present disclosure, one example provides a computer-readable storage medium, on which a computer program is stored which, when being executed by a processor, carries out the management method for navigation tree view according to any of the above examples.

The above description is only the preferred embodiment of the present disclosure and the explanation of the applied technical principles. It should be understood by those skilled in the art that the disclosure scope involved in this disclosure is not limited to the technical scheme formed by the specific combination of the above technical features, but also covers other technical schemes formed by any combination of the above technical features or their equivalent features without departing from the above disclosure concept. For example, the above features are replaced with (but not limited to) technical features with similar functions disclosed in this disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A management method for navigation tree view comprising:
displaying an object production interface of a target object production tool, wherein the object production interface comprises a navigation tree view, wherein a root component set presented in the navigation tree view represents an object content category of a target object, and wherein a sub-component set under the root component set belongs to the object content category;
receiving an interactive operation performed on the object production interface; and
in response to the interactive operation meeting a set division update condition in the navigation tree view, updating a target sub-component set associated with the interactive operation and/or updating the root component set to which the target sub-component set belongs, and presenting it on the navigation tree view.

2. The method of claim 1, wherein determining whether the interactive operation meets the set division update condition in a navigation tree view is performed by:
analyzing the interactive operation, and determining an operation behavior event corresponding to the interactive operation;
in response to the operation behavior event existing in a pre-constructed navigation tree operation behavior set, determining an operation type of the operation behavior event; and
in response to the operation type belonging to a setting operation type, determining that the interactive operation meets the set division update condition in the navigation tree view.

3. The method of claim 1, wherein the sub-component set under the root component set comprises component label information, and each piece of component label information is associated with one piece of component data;
before the updating a target sub-component set associated with the interactive operation and/or updating the root component set to which the target sub-component set belongs, the method further comprises:
determining the component data involved in the interactive operation after response as target component data; and
acquiring target component label information corresponding to the target component data, and determining the sub-component set containing the target component label information as the target sub-component set.

4. The method of claim 1, wherein the updating a target sub-component set associated with the interactive operation and/or updating the root component set to which the target sub-component set belongs comprises:
updating target component label information contained in the target sub-component set, wherein the target component label information is associated with target component data involved in the interactive operation after response; and/or
updating the target sub-component set to a determined target root component set according to a pre-constructed policy set for dividing the object content category.

5. The method of claim 4, wherein the updating the target sub-component set to a determined target root component set according to a pre-constructed policy set for dividing the object content category comprises:
acquiring a first root component set to which the target sub-component set belongs before being updated;
determining a second root component set to which the target sub-component set belongs after being updated according to the policy set for dividing the object content category; and
determining the target root component set from the first root component set and the second root component set, and updating the target sub-component set to the target root component set.

6. The method of claim 5, wherein the determining a second root component set to which the target sub-component set belongs after being updated according to the policy set for dividing the object content category comprises:
acquiring a policy for dividing the object content category contained in the policy set for dividing the object content category, wherein each policy for dividing the object content category corresponds to one object content category;
determining parameter information to be determined of the target sub-component set according to component label information contained in the target sub-component set after being updated; and
determining a target object content category to which the target sub-component set belongs after being updated according to the parameter information to be determined and the policy for dividing the object content category, and marking a root component set corresponding to the target object content category as a second root component set.

7. The method of claim 5, wherein the determining the target root component set from the first root component set and the second root component set, and updating the target sub-component set to the target root component set comprises:
in response to the first root component set and the second root component set being the same root component set, determining the first root component set as the target root component set and keeping the target sub-component set unchanged in the first root component set;
in response to the first root component set and the second root component set being different root component sets, determining the second root component set as the target root component set and determining whether the target root component set exists in the navigation tree view;
if yes, moving the target sub-component set from the first root component set to the target root component set;
if not, constructing the target root component set and adding it into the navigation tree view, and moving the target sub-component set from the first root component set to the target root component set.

8. A management apparatus for navigation tree view, comprising:
an interface display module configured to display an object production interface of a target object production tool, wherein the object production interface comprises a navigation tree view, a root component set presented in the navigation tree view represents an object content category of a target object, and a sub-component set under the root component set belongs to the object content category;
an operation receiving module configured to receive an interactive operation performed on the object production interface; and
a view presentation module configured to, in response to the interactive operation meeting a set division update condition in the navigation tree view, update a target sub-component set associated with the interactive operation and/or updating the root component set to which the target sub-component set belongs, and present it on the navigation tree view.

9. An electronic device, comprising:
one or more processors;
storage device for storing one or more programs;
the one or more programs, when executed by the one or more processors, cause the one or more processors to implement the method of any of claims 1-7.

10. The electronic device of claim 9, wherein the one or more programs, when executed by the one or more processors, further cause the one or more processors to:
analyze the interactive operation, and determine an operation behavior event corresponding to the interactive operation;
in response to the operation behavior event existing in a pre-constructed navigation tree operation behavior set, determine an operation type of the operation behavior event; and
in response to the operation type belonging to a setting operation type, determine that the interactive operation meets the set division update condition in the navigation tree view.

11. The electronic device of claim 9, wherein the sub-component set under the root component set comprises component label information, and each piece of component label information is associated with one piece of component data; and
the one or more programs, when executed by the one or more processors, further cause the one or more processors to:
determine the component data involved in the interactive operation after response as target component data; and
acquire target component label information corresponding to the target component data, and determine the sub-component set containing the target component label information as the target sub-component set.

12. The electronic device of claim 9, wherein the one or more programs, when executed by the one or more processors, further cause the one or more processors to:
update target component label information contained in the target sub-component set, wherein the target component label information is associated with target component data involved in the interactive operation after response; and/or
update the target sub-component set to a determined target root component set according to a pre-constructed policy set for dividing the object content category.

13. The electronic device of claim 12, wherein the one or more programs, when executed by the one or more processors, further cause the one or more processors to:
acquire a first root component set to which the target sub-component set belongs before being updated;
determine a second root component set to which the target sub-component set belongs after being updated according to the policy set for dividing the object content category; and
determine the target root component set from the first root component set and the second root component set, and update the target sub-component set to the target root component set.

14. The electronic device of claim 13, wherein the one or more programs, when executed by the one or more processors, further cause the one or more processors to:
acquire a policy for dividing the object content category contained in the policy set for dividing the object content category, wherein each policy for dividing the object content category corresponds to one object content category;
determine parameter information to be determined of the target sub-component set according to component label information contained in the target sub-component set after being updated; and
determine a target object content category to which the target sub-component set belongs after being updated according to the parameter information to be determined and the policy for dividing the object content category, and mark a root component set corresponding to the target object content category as a second root component set.

15. The electronic device of claim 13, wherein the one or more programs, when executed by the one or more processors, further cause the one or more processors to:
in response to the first root component set and the second root component set being the same root component set, determine the first root component set as the target root component set and keep the target sub-component set unchanged in the first root component set;
in response to the first root component set and the second root component set being different root component sets, determine the second root component set as the target root component set and determine whether the target root component set exists in the navigation tree view;
if yes, move the target sub-component set from the first root component set to the target root component set;
if not, construct the target root component set and adding it into the navigation tree view, and moving the target sub-component set from the first root component set to the target root component set.

16. A computer-readable storage medium, on which a computer program is stored which, when being executed by a processor, carries out the method of any one of claims 1-7.
